**Europäisches Patentamt**

**European Patent Office**

**Office européen des brevets**

(11) Numéro de publication : **0 348 287 B1**

(12) **FASCICULE DE BREVET EUROPEEN**

(45) Date de publication du fascicule du brevet :
**25.11.92 Bulletin 92/48**

(21) Numéro de dépôt : **89401713.6**

(22) Date de dépôt : **16.06.89**

(51) Int. Cl.⁵ : **B60K 17/34**

(54) **Transmission longitudinale arrière pour véhicule à moteur transversal à quatre roues motrices.**

(30) Priorité : **22.06.88 FR 8808392**

(43) Date de publication de la demande :
**27.12.89 Bulletin 89/52**

(45) Mention de la délivrance du brevet :
**25.11.92 Bulletin 92/48**

(84) Etats contractants désignés :
**DE FR GB IT**

(56) Documents cités :
**EP-A- 0 094 870**
**DE-C- 650 692**
**DE-C- 3 411 746**

(73) Titulaire : **Dangel, Henry**
**54 Avenue de la 1ère D.B.**
**F-68100 Mulhouse (FR)**

(72) Inventeur : **Dangel, Henry**
**54 Avenue de la 1ère D.B.**
**F-68100 Mulhouse (FR)**

(74) Mandataire : **Martin, Jean-Paul et al**
**c/o CABINET LAVOIX 2, Place d'Estienne d'Orves**
**F-75441 Paris Cedex 09 (FR)**

Jouve, 18, rue Saint-Denis, 75001 PARIS

## Description

La présente invention a pour objet une transmission longitudinale arrière pour véhicule à moteur transversal à quatre roues motrices, du type comportant un carter de renvoi du mouvement vers l'arrière, mécaniquement lié à un groupe motopropulseur, un carter de différentiel arrière et des moyens de liaison longitudinale reliant ces deux carters.

On sait que sur les véhicules à moteur transversal à quatre roues motrices, le carter de renvoi du mouvement vers l'arrière est généralement solidaire du groupe motopropulseur et oscille avec ce dernier. Ceci rend nécessaire le montage d'une transmission longitudinale composée d'un arbre brisé et de plusieurs joints de transmission avec coulisseaux (cardans).

Par ailleurs, la longueur de cette transmission nécessite le montage de paliers intermédiaires fixés au plancher, afin de ne pas dépasser les vitesses critiques autorisées.

Ce montage présente les inconvénients suivants :
- encombrement important (joints, paliers),
- montage onéreux (joints de transmission et coulisseaux),
- difficulté pour isoler l'habitacle au niveau des liaisons par palier.
- fiabilité difficile à garantir dans le temps (étanchéité, graissage).

Par ailleurs, le brevet EP-A 0 160 188 décrit une transmission longitudinale dans laquelle le carter de renvoi du mouvement vers l'arrière est articulé sur l'ensemble motopropulseur autour d'un axe transversal et le tube de transmission vers l'arrière est réalisé en tronçons articulés.

D'autre part, le brevet allemand 650 692 divulgue une transmission comportant un tube rigide de liaison entre le groupe motopropulseur et l'essieu arrière, avec lesquels il forme un ensemble rigide. De ce fait, le tube de liaison supporte une partie du poids du moteur et doit donc être très solide et avoir un grand diamètre pour pouvoir résister à ces contraintes de flexion.

L'invention a pour but de réaliser une transmission du type ci-dessus ne présentant pas ces inconvénients.

Suivant l'invention, le carter de renvoi du mouvement est relié au carter de différentiel arrière par un tube rigide contenant un arbre de transmission, les deux carters précités et le tube de liaison formant un ensemble monobloc articulé sur le groupe motopropulseur, autour d'un axe parallèle à l'axe du groupe motopropulseur.

Ce montage empêche dans une large mesure la transmission possible des vibrations du groupe motopropulseur à l'habitacle via les paliers fixés habituellement au plancher, du fait de l'implantation de ces derniers à l'intérieur du tube reliant le carter de renvoi au carter de différentiel arrière. De plus, le tube de liaison longitudinal ne supporte pas une partie du poids du moteur, donc d'efforts de flexion. Il peut donc être beaucoup plus léger et de diamètre largement inférieur à celui nécessaire dans la transmission du brevet allemand précité DE-C-650 692.

Le groupe moteur est avantageusement monté sur des cales élastiques, fixées au châssis, tandis que le débattement du carter de renvoi est absorbé par montage du carter de différentiel arrière sur des éléments élastiques solidaires du châssis.

D'autres particularités et avantages de l'invention apparaîtront au cours de la description qui va suivre, faite en référence aux dessins annexés qui en illustrent une forme de réalisation à titre d'exemple non limitatif.

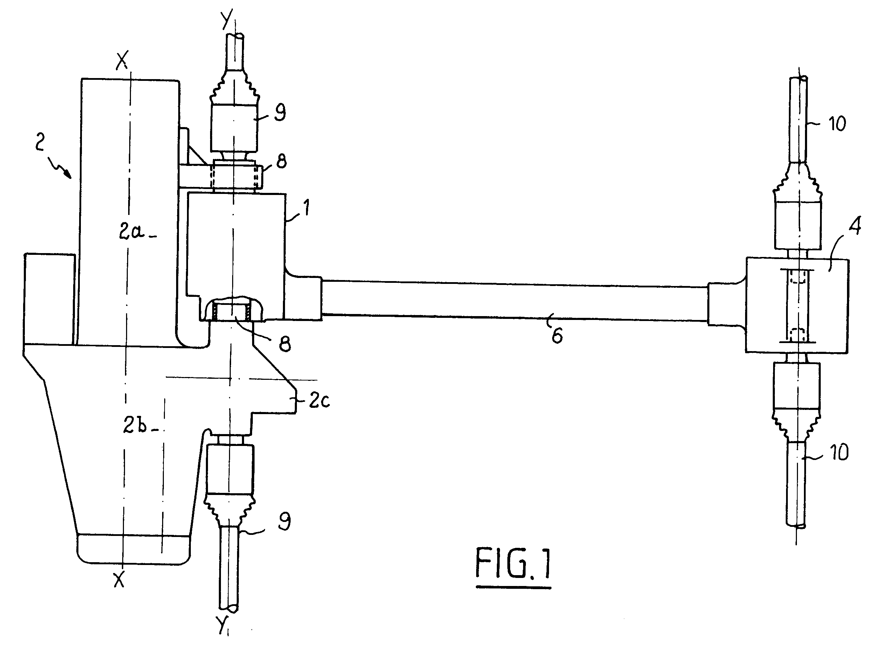

La Figure 1 est une vue en plan d'une forme de réalisation de la transmission longitudinale arrière selon l'invention.

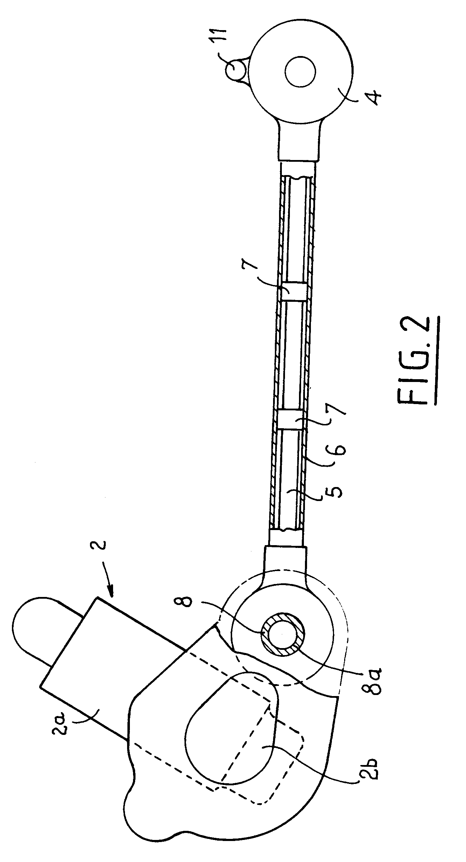

La Figure 2 est une vue en élévation longitudinale avec coupe partielle de la transmission de la Fig. 1.

Le dispositif représenté aux dessins est une transmission longitudinale arrière pour véhicule à quatre roues motrices, comportant un carter 1 de renvoi du mouvement vers l'arrière, mécaniquement lié à un groupe motopropulseur 2 d'axe transversal X-X par l'intermédiaire d'un carter de différentiel avant 2c dudit groupe 2, qui comporte le moteur 2a et un carter 2b de boîte de vitesses.

Le carter 1 peut contenir un dispositif de renvoi, ou bien en plus de celui-ci un différentiel interponts répartissant les couples entre les deux ponts avant et arrière.

Ce carter de renvoi 1 est monté oscillant autour d'un axe transversal Y-Y parallèle à l'axe X-X du groupe motopropulseur 2, et qui est défini par des paliers 8 de support solidaires du groupe 2. Avantageusement les paliers 8 sont revêtus d'un matériau antifriction 8a qui évite les grippages lors de très faibles mouvements du groupe 2 et du carter 1. De part et d'autre du carter de différentiel avant 2c et du carter de renvoi 1 sont placés les systèmes de transmission avant 9 aux roues avant (non représentées), ainsi que de part et d'autre du carter de différentiel arrière 4, des systèmes de transmission arrière 10.

La transmission comprend également un arbre de transmission 5 reliant le carter de renvoi 1 à un carter de différentiel arrière 4, ainsi qu'un tube rigide 6 solidaire desdits carters 1 et 4 et qui contient l'arbre de transmission 5. Ce dernier repose sur de petits paliers 7 intérieurs au tube 6.

Les deux carters, de renvoi 1 et de différentiel arrière 4, et le tube de liaison 6 forment un ensemble monobloc articulé sur le groupe 2 autour de l'axe YY.

Le groupe motopropulseur 2 est monté sur des cales élastiques non représentées fixées au chassis, et de même le carter 4 est suspendu au chassis par un dispositif élastique 11 qui permet d'absorber le débattement de l'ensemble monobloc 1,4,6 dans le sens vertical et dans le sens longitudinal. (En pratique, l'amplitude maximum au niveau des paliers 8 dans le sens longitudinal peut être par exemple de 12mm, et de 15mm dans le sens vertical).

L'axe d'articulation Y-Y du carter de renvoi 1 sur le groupe motopropulseur 2 n'est pas nécessairement confondu avec l'axe du différentiel avant 2c comme représenté, mais peut être décalé et parallèle à ce dernier.

En variante également, le tube de liaison 6 n'est pas nécessairement placé dans le plan médian du véhicule, mais peut être décalé dans un plan parallèle à ce dernier.

L'avantage essentiel de l'articulation du carter de renvoi 1 sur un axe Y-Y parallèle à l'axe X-X du groupe moteur 2 réside dans le fait qu'il permet de remplacer les systèmes antérieurs complexes, fragiles, encombrants et éventuellement bruyants par un ensemble monobloc simplifié, d'encombrement notablement réduit, moins coûteux et plus fiable. Cet ensemble monobloc comprend comme déjà indiqué les deux carters avant et arrière 1 et 4 et le tube de liaison 6.

Les joints de transmission et coulisseaux antérieurement nécessaires pour l'arbre brisé sont supprimés grâce à l'arbre unique 5, qui peut être logé dans le tube rigide 6 lequel diminue le niveau de bruit dans l'habitacle du véhicule du fait qu'il n'a pas de liaison avec le plancher.

## Revendications

1. Transmission longitudinale arrière pour véhicule à quatre roues motrices, comportant un carter (1) de renvoi du mouvement vers l'arrière mécaniquement lié à un groupe motopropulseur (2) d'axe transversal, un carter de différentiel arrière (4) et des moyens de liaisons longitudinale reliant ces deux carters, caractérisée en ce que le carter (1) de renvoi du mouvement est relié au carter de différentiel arrière (4) par un tube rigide (6) contenant un arbre de transmission (5), les deux carters précités (1, 4) et le tube de liaison (6) formant un ensemble monobloc articulé sur le groupe motopropulseur (2), autour d'un axe (YY) parallèle à l'axe (XX) du groupe motopropulseur (2).

2. Transmission selon la revendication 1, caractérisée en ce que le carter (1) de renvoi du mouvement vers l'arrière est articulé sur des paliers (8) de support solidaires du groupe motopropulseur (2).

3. Transmission selon l'un des revendications 1 et 2, dans laquelle le groupe motopropulseur (2) comprend un carter de différentiel avant (2c), caractérisée en ce que l'axe d'oscillation (YY) du carter de renvoi (1) est décalé de l'axe du carter de différentiel avant (2c) et parallèle à celui-ci.

4. Transmission selon l'une des revendications 1 à 3, caractérisée en ce que les paliers (8) d'articulation du carter de renvoi (1) sont revêtus d'un matériau antifriction.

## Patentansprüche

1. Übertragungswelle für den Hinterradantrieb eines Fahrzeugs mit Vierradantrieb mit einem Vorgelegegehäuse (1) für den Hinterradantrieb, das mechanisch mit einem Antriebsaggregat (2) mit Querachse verbundenen ist, einem Hinterdifferentialgehäuse (4) und einer Längsverbindungsvorrichtung, die die beiden Gehäuse verbindet, dadurch gekennzeichnet, daß das Vorgelegegehäuse (1) mit dem Hinterdifferentialgehäuse (4) durch ein starres, eine Kraftübertragungswelle (5) umfassendes Rohr (6) verbunden ist, wobei die beiden Gehäuse (1, 4) und das Verbindungsrohr (6) eine einstückige Anordnung bilden, die an dem Antriebsaggregat (2) um eine Achse (YY) herum parallel zur Achse (XX) des Antriebsaggregats (2) schwenkbar gelagert ist.

2. Übertragungswelle nach Anspruch 1, dadurch gekennzeichnet, daß das Vorgelegegehäuse (1) für den Hinterradantrieb durch Lager (8) gelenkig gelagert ist, die fest mit dem Antriebsaggregat (2) verbunden sind.

3. Übertragungswelle nach einem der Ansprüche 1 und 2, bei welcher das Antriebsaggregat (2) ein Vorderdifferentialgehäuse (2c) aufweist, dadurch gekennzeichnet, daß die Schwingaschse (YY) des Vorgelegegehäuses (1) von der Achse des Vorderdifferentialgehäuses (2c) versetzt und zu dieser parallel ist.

4. Übertragungswelle nach einem der Ansprüche 1 - 3, dadurch gekennzeichnet, daß die Lager (8) für das Vorgelegegehäuse (1) mit einem Antifriktionsmaterial beschichtet sind.

## Claims

1. Longitudinal rear transmission for a four-wheel drive vehicle, comprising a casing (1) for transmitting motion to the rear, mechanically connected to a transversely mounted motive power unit (2), a rear differential casing (4) and longitudinal connection means connecting these two casings, characterised in that the transmission casing (1) is connected to the rear differential casing (4) by a rigid tube (6) containing a transmission shaft (5), the aforesaid two casings (1, 4) and the connecting tube (6) forming a single-piece assembly articulated on the motive power unit (2) about an axis (YY) parallel to the axis (XX) of the motive power unit (2).

2. Transmission according to Claim 1, characterised in that the casing (1) for transmitting motion to the rear is articulated on support bearings (8) secured to the motive power unit (2).

3. Transmission according to one of Claims 1 or 2, in which the motive power unit (2) comprises a front differential casing (2c), characterised in that the oscillation axis (YY) of the transmission casing (1) is offset from the axis of the front differential casing (2c) and parallel to it.

4. Transmission according to one of Claims 1 to 3, characterised in that the bearings (8) on which the transmission casing (1) is articulated are covered with a non-friction material.

FIG.1

<u>FIG. 2</u>

EP 0 348 287 B1